Europäisches Patentamt

European Patent Office

Office européen des brevets

(19)

(11)     EP 0 977 028 A1

(12)                    EUROPEAN PATENT APPLICATION
                        published in accordance with Art. 158(3) EPC

(43) Date of publication:
     02.02.2000 Bulletin 2000/05

(51) Int. Cl.$^7$: G01N 21/39

(21) Application number: 99901876.5

(86) International application number:
     PCT/JP99/00323

(22) Date of filing: 27.01.1999

(87) International publication number:
     WO 99/39188 (05.08.1999 Gazette 1999/31)

(84) Designated Contracting States:
     DE FR GB IT NL

(30) Priority: 28.01.1998 JP 1620198

(71) Applicant:
     Nippon Sanso Corporation
     Tokyo 105-0003 (JP)

     • MORISHITA, Jun-ichi
       Nippon Sanso Corporation
       Tokyo 105-0003 (JP)

(74) Representative:
     Ilgart, Jean-Christophe et al
     c/o Société de Protection des Inventions,
     3, rue du Docteur Lancereaux
     75008 Paris (FR)

(72) Inventors:
     • WU, Shang-Qian
       Nippon Sanso Corporation
       Tokyo 105-0003 (JP)

(54)     METHOD OF SPECTROCHEMICAL ANALYSIS OF IMPURITY IN GAS

(57)     The present invention provides an absorption
spectrographic analysis method which uses frequency
modulated semiconductor laser light. In this method an
absorption spectrum is measured by setting a current
value B at which saturation of variation in laser emitting
power which accompanies increases in injection current
for a semiconductor laser as a lower limit current value
for the injection current to the semiconductor laser-emit-
ting element; setting a current value C at which variation
in wavelength transition which accompanies increases
in injection current initially becomes minimal as an
upper limit current value for the injection current to the
semiconductor laser-emitting element; and using laser
light which oscillates at an injection current region
between this lower limit current value and this upper
limit current value as the semiconductor laser light.
According to the method of the present invention, it is
possible to measure minute amounts of impurities con-
tained in gases with high sensitivity and accuracy.

FIG.10

EP 0 977 028 A1

**Description**

Background of the Invention

Field of the Invention

The present invention relates to a method for analyzing trace amounts of impurities in gases with high sensitivity and high accuracy and, in particular, relates to a method for analyzing impurities in gases in which tunable diode laser light is used and the adsorption signal intensity thereof is measured.

Description of the Related Art

As a method for analyzing trace amounts of impurities in gases, an analysis method in which semiconductor laser light is used in the light source and the absorption signal strength thereof is measured has been used because of its suitability from the point of view of measurement accuracy and sensitivity.

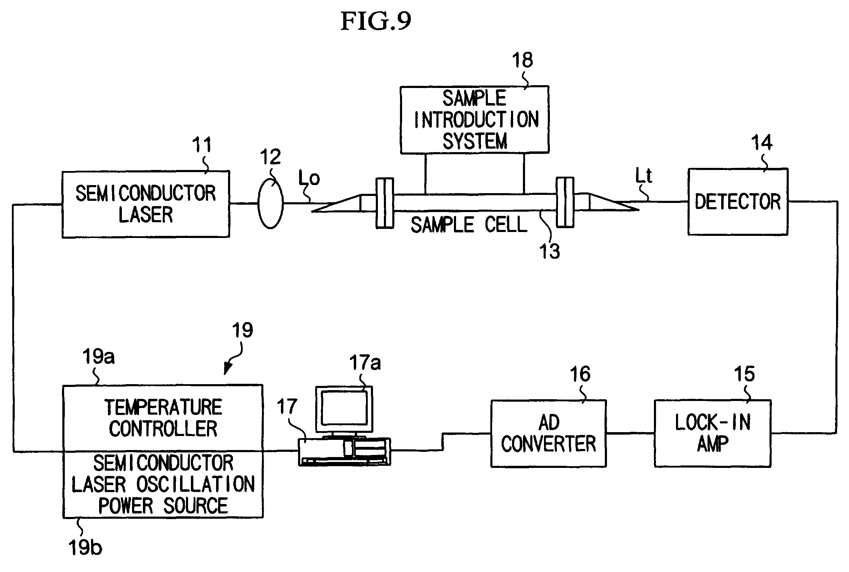

This method is carried out using the semiconductor laser spectrographic analysis device shown in Figure 9. In more detail, Figure 9 is a line diagram showing an example of a semiconductor laser spectrographic analysis device, the laser light ($L_0$) emitted by the semiconductor laser-emitting element (light source) is collimated by the collimator 12 and projected into the sample cell 13. Then, the strength of the transmitted light ($L_t$) which has passed through and out of the sample cell 13 is measured by a photodetector 14 comprising a sensor such as a Ge photodiode, for example. The output resulting therefrom is input into a lock-in amplifier 15 and is amplified, then it passes through AD converter 16 which converts this output signal to a digital signal which is input into computer 17. Next, by means of the above-mentioned computer 17, the absorption spectrum is calculated using the data stored and accumulated in that computer 17. In addition, the results thereof can be presented as an image on the screen of display 17a, a chart thereof can be stored on a storage medium, or the like, and the data can be read out and recovered using a suitable means.

In addition, the above-mentioned sample cell 13 is equipped with a sample introduction system 18 comprising an evacuation means for evacuating the inside of the cell 13 and a sample introduction means for introducing a sample at an appropriate pressure and flow rate.

In addition, as the above-mentioned semiconductor laser-emitting element, InGaAsP, InGaAs, GaInAsSb, GaInSbP, AlInSb, AlInAs, AlGaSb and the like can be suitably used, however, it is not limited to these, and other semiconductor lasers can be suitably selected and used in order to select the best wavelength for the analysis.

In addition, at the time of measurement, the temperature of the laser element of the semiconductor laser is suitably adjusted by means of a temperature controller 19a which is installed on the laser driver 19, and, after an oscillation wavelength region suitable for use is obtained, that temperature is maintained at a constant level, the injection current is varied by means of an oscillating power source 19b which is installed on the laser driver 19, and a wavelength region suitable for absorption is appropriately selected. The wavelength is driven and varied (scanned) at fixed intervals, and oscillation obtained, thereby, the transmission light (Lt) which passes through the sample cell 13 is measured and measurement of the absorption spectrum is carried out. From this absorption spectrum, the absorption signal strength can be determined, and from the absorption signal strength, the amount of impurities contained in the gas can be determined. In addition, since the laser driver 19 is used connected to the above-mentioned computer, driving (scanning of the wavelength) of the injection current and the desired oscillation wavelength region can be appropriately carried out, appropriately synchronized with the measured results, and appropriate data can be obtained.

With regard to this spectrographic analysis method, the inventors of the present invention have previously filed an application for an invention related to a method for analysis and measurement of impurities in a gas using a wavelength variable laser having an InGaAsP-type semiconductor laser-emitting source oscillating in a wavelength region of 1.3 to 1.55 μm, as shown in Japanese Unexamined Patent Application, First Publication No. Hei 5-99845.

With regard to the light source using this semiconductor laser-emitting element, the oscillation wavelength can be caused to continuously vary by means of varying the injection current or the element temperature. In particular, in this analysis method, a method referred to as a frequency modulation method is adopted for the purpose of increasing measurement sensitivity.

This frequency modulation method is a method in which the frequency of the oscillated signal is modulated as shown by the following formula.

$$i = I_0 + a \cdot \sin \omega t$$

Wherein,

i: is the injection current of the laser;
$I_0$: is the direct current component of the oscillation frequency;
a: is the modulation amplitude (determined by alignment with the spectral bandwidth of the adsorption line);
ω: is the modulation angular frequency; and
a · sin ω t : is the alternating current component.

In other words, the direct current component [$I_0$] is superimposed on the alternate current component

[a · sin ω t ]and then injected to directly modulate the oscillation frequency of the laser.

In the application of this frequency modulation method, there are methods in which a primary differential spectrum is measured by extracting the same component as the modulation frequency, methods in which a secondary differential spectrum is measured by extracting a double component of the modulation frequency, and methods in which a bit frequency component is extracted by simultaneously modulating two or more frequencies.

Specifically, a sine wave of 4 kHz obtained by varying the direct current component is introduced into the laser diode (LD) driver from a function generator, the laser diode is driven by the direct current over which the sine wave has been superimposed, and the frequency modulated light is made to oscillate.

In this method, when the spectral bandwidth is increased, it is necessary for the modulation amplitude (the above-mentioned "a") to also be increased. However, when "a" is increased, fluctuation in the output power also increases, and this means that noise increases.

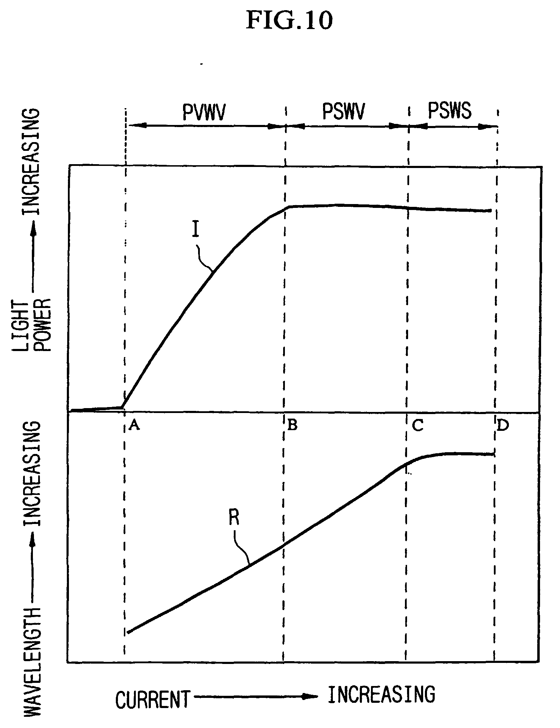

With regard to the semiconductor laser-emitting elements which are used as this type of light source, the present inventors have modeled the variation of oscillation laser light power and laser wavelength for situations in which the temperature of the element is made constant and the injection current injected into this element is varied, and they have confirmed those conditions. This is shown in Figure 10.

In the figure, curve I shows the condition of the variation in light power which accompanies variation in the injection current, and curve R shows the condition of the variation of wavelength which accompanies variation in the injection current.

For this semiconductor laser-emitting element, when the injection current exceeds the threshold value A, the light power (curve I) appears, and light of a specific wavelength (curve R) begins to oscillate. Next, as the injection current increases, light power increases and wavelength also progresses to successively larger specific wavelength light. Next, when the injection current exceeds point B, the light power ceases to vary and reaches a saturation condition (curve I). However, the oscillation wavelength continues to progress in the direction of even larger specific wavelengths (curve R). Furthermore, when the injection current increases further and point C is exceeded, in addition to there being no variation (curve I) in light power, the variation in the wavelength transition is extremely small (curve R).

It is possible to distinguish the following types of phenomenon regions due to the differences in phenomena produced based on these transition points A, B and C.

Region A ~ B: Power Variation Wavelength Variation (PVWV)

In this region, the variation in the oscillation light power and the variation in the wavelength transition of the laser light within the current range which corresponds to the absorption line width are approximately the same linearly.

Region B ~ C: Power Saturation Wavelength Variation (PSWV)

The feature of this region is that the variation in light power with respect to variation in injection current is zero or minimal, while the variation in wavelength transition with respect to the variation in injection current is at its greatest.

Region C ~ : Power Saturation Wavelength Saturation (PSWS)

In this region, even when the injection current is increased, the variation in light power is zero or increases are absent, and variation in the wavelength transition is also saturated and minimal.

Nevertheless, in Figure 10 which models the variation in wavelength transition and the variation in light power with respect to the variation in injection current, the variations in light power and oscillation wavelength associated with the variation in injection current in the PVWV region (Region A ~ B) are such that they are approximately the same linearly as mentioned above. Therefore, circumstances are such that it is preferable for spectrometry analysis to be conducted within the region of this injection current value. In addition, at present, current values at which it is not possible for the variation in light power and oscillation wavelength mentioned above to resemble each other linearly, in other words, regions at which current values are greater than point B, are considered to be of no particular interest and they do not receive attention.

However, when conventional spectrographic analysis is carried out using the PVWV region (Region A ~ B), the following major problems 1 and 2 occur.

1. Generation of RAM Noise (Residual Amplitude Modulation Noise)

In more detail, when the modulation amplitude "a" is increased during the frequency modulation, fluctuation of the signal and the offset value increase. This will be explained in more detail based on results of tests.

Using a distributed feed-back (DFB) laser emitting element of 1.39 μm band as the semiconductor laser emitter element, light was emitted by conducting direct frequency modulation by superimposing a sine wave (the alternating current component) of 4 kHz onto the injection current (direct current component).

This light was projected into a sample cell having a light path length of 50 cm into which high purity nitrogen gas had been introduced at a pressure of 70 Torr, the light which passed through this cell was received by a light detector comprising a Ge photodiode, the output thereof was input into a lock-in-amp and the 2f component of the modulation frequency (the double component) was extracted, and the variation of the output (V) of the signal of this 2f component was measured by varying the injection current to the laser-emitting element, in the following way.

Scanning the injection current (direct current component) to the laser element at intervals of 0.2 mA from 75 to 85 mA, and varying the amplitude (from peak to peak) of the alternating current component of the injection current to 2, 3, 4, 5, and 7 mA respectively.

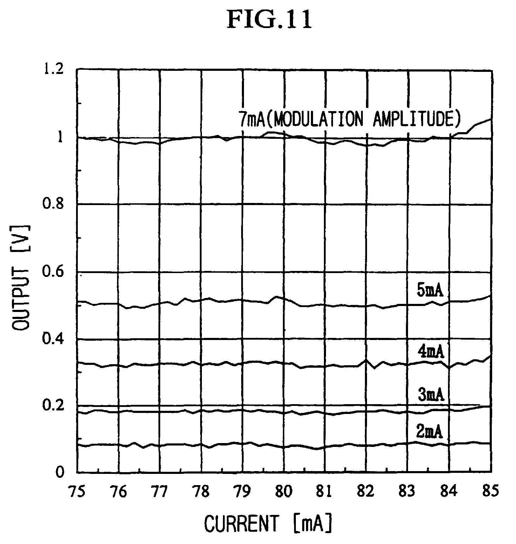

As a result, when the modulation amplitude (of the alternating current component of the injection current) is increased to 2, 3, 4, 5, and 7 mA as shown in the graph in Figure 11, the output increases. This shows that the offset value increases, and in addition it can be seen that the fluctuation in the signal of the respective output curves also increases along with increases in the modulation amplitude.

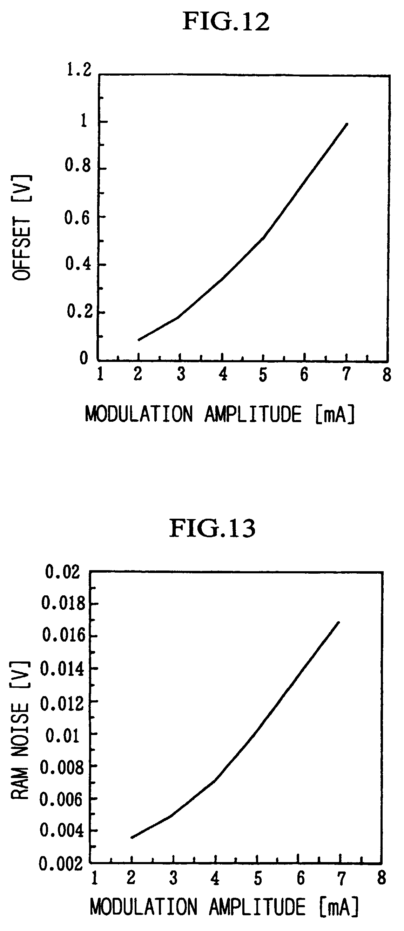

Figure 12 is a graph showing the average value of the output signal of the offset value (V) which accompanies the variation in the modulation amplitude (mA) prepared based on Figure 11. Figure 13 is a graph showing the variation in the standard deviation, in other words, the value of the RAM noise (V), of the output signal which accompanies the variation in the injection current for each of the modulation amplitudes (mA) in Figure 11.

From the above, it was confirmed that with laser light of the injection current region of the PVWV region (Region A ~ B) which is used conventionally, when the modulation amplitude is increased greatly in order to increase sensitivity, the offset value and the RAM noise are increased.

And:

2. Impossibility of Measuring Minute Absorption Signals

In more detail, when measuring minute absorption signals, it is necessary to increase the sensitivity of the measuring device. However, when RAM noise and output off-set due to frequency modulation are present, sensitivity is limited by this noise, and it is not possible to increase the measurement sensitivity of the device. In other words, to increasing the sensitivity, it is necessary to increase the amplitude of the frequency modulation, but when this is increased, the off-set as shown in Figure 12 increases and the RAM noise as shown in Figure 13 increases. For this reason, with this type of conventionally used spectrographic analysis method, it is not possible to extract variations of minute absorption signals.

Therefore, in order to solve the problems and difficulties of this type of conventional method for spectrographic analysis of impurities in gases, the present invention has as an object the suppression to a minimum of the increase in off-set and of RAM noise (effects of noise due to variation in light power) generated during frequency modulation. In order to achieve this object, various methods for frequency modulation were devised and studied. Then, attention was drawn to the fact that the cause of the increases in offset signal and increases in RAM noise accompanying increases in modulation amplification lay in the variation of the oscillation light power. As a result, the present invention was made which provides a spectrographic analysis method in which semiconductor laser light is caused to oscillated in an injection current region at which modulation of oscillation light power is small, and by using this laser light, it is possible to measure trace amounts of impurities contained in gases with high sensitivity and high accuracy.

Summary of the Invention

In order to solve the above-mentioned problems and to achieve the objects of the present invention, the invention of claim 1 is a method for spectrographic analysis of impurities in gases by measuring the absorption signal strength using frequency modulated semiconductor laser light comprising setting as a lower limit current value a current value at which saturation of variation in the laser oscillation light power with respect to the injection current for a semiconductor laser begins, and setting as an upper limit current value a current value at which variation in the wavelength transition with respect to the injection current initially becomes minimal, and conducting spectrographic analysis using laser light emitted in a region of injection current values between these two values. The invention of claim 2 is a method for spectrographic analysis of impurities in gas according to claim 1, wherein the center of the current region of the injection current values is made the center point of the current region in which the variation in the increase of the laser oscillation light power with respect to the increase in injection current to the semiconductor laser-emitting element is zero or becomes minimal. In addition, the invention of claim 3 is a method for spectrographic analysis of impurities in gas according to claims 1 or 2 comprising maintaining the temperature of the semiconductor laser-emitting element constant, adjusting the region of the injection current, synchronizing the oscillation wavelength of the laser light, the central wavelength of absorption of the laser light, and the center of the injection current region, and measuring the absorption signal strength using semiconductor laser light.

Brief Description of the Drawings

Figure 1 shows graphs of the variation in light power and the variation in wavelength transition which accompany variation in the injection current of the semiconductor laser-emitting element (M1) of a first embodiment using the analysis method of the present invention; Figure 1A shows variation in light power, and Figure 1B shows variation in wavelength transition.

Figure 2 shows graphs of the variation in RAM noise and variation in offset generated along with the variation in amplitude of the frequency modulation which occurs within the range of the injection current of the PSWV region of the semiconductor laser-emitting element (M1) of a first embodiment using the analysis method of the present invention; Figure 2A shows variation in offset, and Figure 2B shows variation RAM noise.

Figure 3 shows graphs of the variation in light power and the variation in wavelength transition which accompany variation in the injection current of the semiconductor laser-emitting element (M2) of a second embodiment using the analysis method of the present invention; Figure 3A shows variation in light power, and Figure 3B shows variation in wavelength transition.

Figure 4 shows graphs of show the variation in RAM noise and variation in offset generated along with the variation in amplitude of the frequency modulation which occurs within the range of the injection current of the PSWV region of the semiconductor laser-emitting element (M2) of a second embodiment using the analysis method of the present invention; Figure 4A shows variation in offset, and Figure 4B shows variation RAM noise.

Figure 5 shows graphs of the variation in light power and the variation in wavelength transition which accompany variation in the injection current of the semiconductor laser-emitting element (M3) of a third embodiment using the analysis method of the present invention; Figure 5A shows variation in light power, and Figure 5B shows variation in wavelength transition.

Figure 6 shows graphs of the variation in RAM noise and variation in offset generated along with the variation in amplitude of the frequency modulation which occurs within the range of the injection current of the PSWV region of the semiconductor laser-emitting element (M3) of a third embodiment using the analysis method of the present invention; Figure 6A shows variation in offset, and Figure 6B shows variation RAM noise.

Figure 7 is a graph of a secondary differential absorption spectrum in which nitrogen gas containing 5 ppm of water is spectrographically analyzed using an analysis method of the present invention.

Figure 8 is a graph of a secondary differential absorption spectrum in which nitrogen gas containing 5 ppm of water is spectrographically analyzed using an analysis method of conventional technology as a comparative embodiment.

Figure 9 is a line diagram of a semiconductor laser spectrographic analysis device.

Figure 10 is a diagram which models the variation in laser light power and the variation in wavelength transition which accompany the variation in the increase of injection current to the semiconductor laser-emitting element.

Figure 11 is a graph showing the condition of the offset output signal which accompanies the variation of the modulation amplification when frequency modulation is conducted in the injection current region used conventionally.

Figure 12 is a graph showing the output signal of the offset which accompanies the variation of the modulation amplification when frequency modulation is conducted in the injection current region used conventionally, based on Figure 11.

Figure 13 is a graph showing variation in the RAM noise which accompanies variation of the modulation amplitude when the frequency modulation is conducted in the injection current region used conventionally based on Figure 11.

Description of the Preferred Embodiments

The method of spectrographic analysis of impurities in a gas of the present invention is an analysis method in which the absorption signal strength is measured using the semiconductor laser spectrographic analysis device shown in the above-mentioned Figure 9. Laser light is made to oscillate by injecting current into the semiconductor laser-emitting element (emitting element) by means of laser driver 19. Then, in the present invention, the wavelength region of the oscillation light used in this spectrographic analysis corresponds to the injection current region in which the current value at which saturation of the variation in oscillation power of the laser light, for which the injection current to the semiconductor laser-emitting element increases along with increases in the injection current, begins forms the lower limit current value, and the current value at which variation in the wavelength transition accompanying increases in the injection current initially becomes its smallest forms the upper limit current value. In other words, laser light of a wavelength emitted in the injection current region is laser light of a wavelength made to oscillate in the PSWV region (current value region B ~ C) in the model of the semiconductor laser-emitting properties shown in Figure 10. The present invention is a method for spectrographic analysis in which this is used. In addition, due to this, even if the amplification of the frequency modulation is increased, the value of the offset value is kept low, signal variation is suppressed to a very small amount, RAM noise is reduced to such an extent that it can be ignored, sensitivity is increased, and it is possible to carry out analysis of trace amounts of impurities with high accuracy.

In addition, the center of the current region of the above-mentioned injection current values is set to be the current value at which the variation of the increase in laser oscillation light power with respect to increases in the injection current of the semiconductor laser-emitting element is zero or at a minimum. Thereby, the spectrum used in the measurement can be practically used with high sensitivity and high absorption efficiency without waste. In addition, in order to effectively use these with high accuracy as an actual analysis method and an actual device, the present invention is a method in which spectrographic analysis is conducted by maintaining the semiconductor laser-emitting element 11 at a constant temperature and adjusting the injection current region; synchronizing the oscillation wavelength of the laser, the center wavelength of the absorption of the laser, and the center of the injection current region; and measuring the absorption signal strength using the semiconductor laser light.

Embodiment

In order to clearly explain the features of the present invention, in the following, three types of semiconductor laser were used. For each of these semiconductor lasers, the variation in the oscillation wavelength transition (nm) and the variation in the oscillation light power (mW) with respect to the variation in the injection current (mA) were measured; the PSWV region (current region B ~ C) of the present invention, the lower limit current value, the upper limit current value and the center value were specified; and variation in the offset (V) and RAM noise (V) due to variation in the modulation amplitude (mA) of the frequency modulation of this range were confirmed.

Embodiment 1

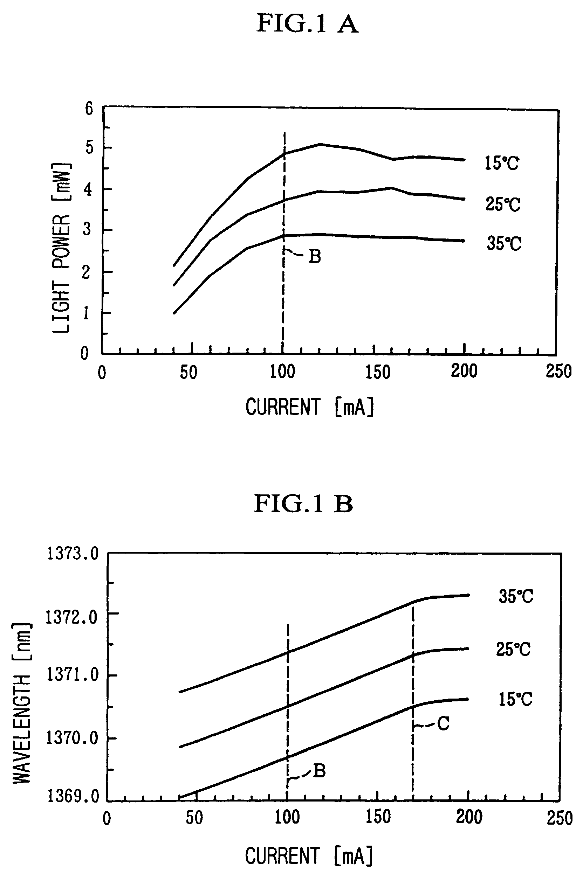

As the emitting element (M1) for the test semiconductor laser, an InGaAsP DFB (distribution feedback) semiconductor laser with which oscillation of laser light having a wavelength of 1369 to 1373 nm is possible was used. The laser element was maintained at each of three temperatures of 15° C, 25° C, and 35° C. At each temperature, the injection current (mA) was varied, and (Figure 1A) the variation in oscillation light power (mW) and (Figure 1B) the variation in oscillation wavelength transition (nm) which accompanied this variation of the injection current were measured. The results are shown by the graphs in Figure 1.

As is clear from the graph in Figure 1A, due to an increase in the injection current (mA), the light power increases proportionally, but in the approximate vicinity of 100 mA (corresponding to point B in Figure 1A), the variation reaches a condition of saturation. On the other hand, as shown by the graph in Figure 1B, as the injection current (mA) increases, the oscillation wavelength transition varies along with it up to 170 mA (corresponding to point C in Figure 1B), however, with increases in the injection current (mA) beyond this, the variation in the wavelength transition stops or remains in an extremely small range.

From these results, the lower limit current value for the injection current is set at approximately 100 mA and the upper limit current value for the injection current is set at approximately 170 mA establishing the PSWV region (region B ~ C) for the semiconductor laser-emitting element (M1) of the present embodiment. It is preferable for the semiconductor laser-emitting element (M1) to oscillate in this injection current region. In addition, the center of this region is approximately 138 mA (15° C), approximately 135 mA (25° C), and approximately 133 mA (35° C).

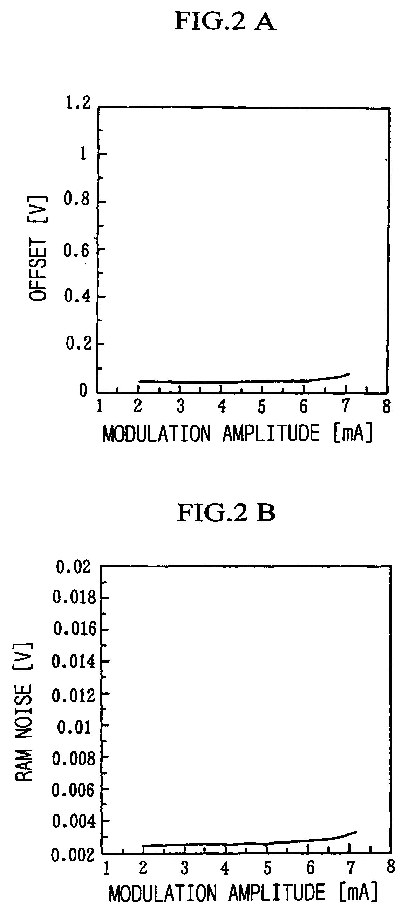

In order to confirm this, in this injection current region, the modulation amplitude of the frequency modulation was varied to 2 ~ 7 mA, and test results for the state of generation of RAM noise (V) and the state of variation of offset (V) due to this variation are shown in Figures 2A and 2B. Figure 2A shows a graph of the condition of the variation of offset (V) and Figure 2B shows a graph of the condition of generation of RAM noise (V).

As is clear from the graphs of Figure 2A and Figure 2B, in this injection current region of approximately 100 to 170 mA, even if the modulation amplitude increases, offset does not increase and, furthermore, it is clear that it is extremely small compared with the offset value for the conventional method shown in Figure 12. In addition, the generation of RAM noise was also extremely small according to this measurement, and it is clear that there was no obstruction of the measurement of variations in minute absorption spectra.

Consequently, oscillation of the above-mentioned laser-emitting element (M1) at an injection current of approximately 100 to 170 mA of the PSWV region (the injection current region B ~ C) at the above-mentioned temperatures of 15° C, 25° C, and 35° C; and oscillation of the obtained signal having a wavelength of 1369.5 ~ 1372.5 nm, in the graph of Figure 1B which corresponds to this, using a frequency modulation method is effectively useful in measuring an absorption spectrum signal for minute quantities of gas with high sensitivity and with high precision.

Embodiment 2

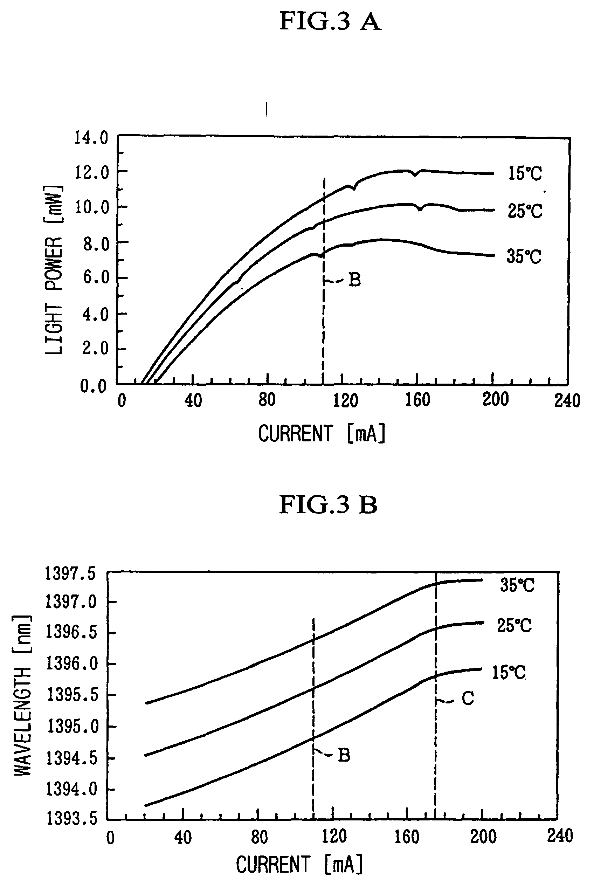

As the emitting element (M2) for the test semiconductor laser, an InGaAsP DFB (distribution feedback) semiconductor laser with which oscillation of laser light having a wavelength of 1393 to 1397 nm is possible was used. The laser element was maintained at each of three temperatures of 15° C, 25° C, and 35° C. At each temperature, the injection current (mA) was varied, and (Figure 3A) the variation in oscillation light power(mW) and (Figure 3B) the variation in oscillation wavelength transition (nm) which accompanied this variation of the injection current were measured. The results are shown by the graphs in Figure 3.

As is clear from the graph in Figure 3A, due to an increase in the injection current (mA), the light power increases proportionally, but in the approximate vicinity of 110 mA (corresponding to point B in Figure 3A), the variation reaches a condition of saturation. On the other hand, as shown by the graph in Figure 3B, as the injection current (mA) increases, the oscillation wavelength transition varies along with it up to 170 mA (corresponding to point C in Figure 3B), however, with increases in the injection current (mA) beyond this, the variation in the wavelength transition stops or remains in an extremely small range.

From these results, the lower limit current value for the injection current is set at approximately 110 mA and the upper limit current value for the injection current is set at approximately 175 mA establishing the PSWV region (region B ~ C) for the semiconductor laser-emitting element (M2) of the present embodiment. It is preferable for the semiconductor laser-emitting element (M2) to oscillate in this injection current region. In addition, the center of this region is approximately 153 mA (15° C), approximately 155 mA (25° C), and approximately 145 mA (35° C).

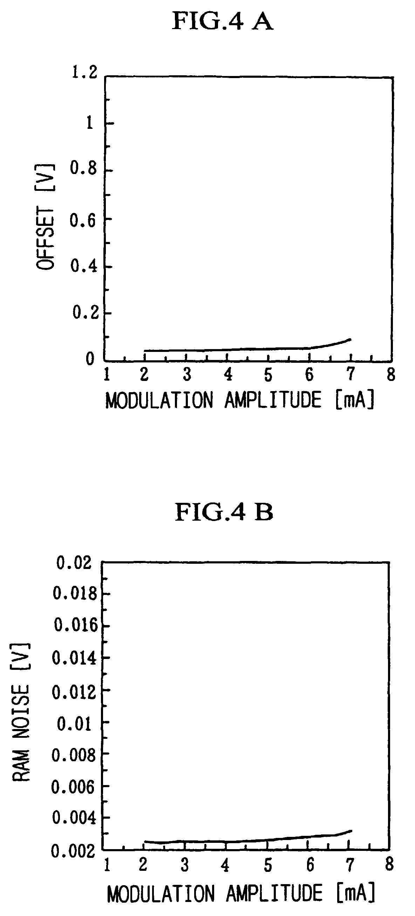

In order to confirm this, in this injection current region, the modulation amplitude of the frequency modulation was varied to 2 ~ 7 mA, and test results for the state of generation of RAM noise (V) and the state of variation of offset (V) due to this variation are shown in Figures 4A and 4B. Figure 4A shows a graph of the condition of the variation of offset (V) and Figure 4B shows a graph of the condition of generation of RAM noise (V).

As is clear from the graphs of Figure 4A and Figure 4B, in this injection current region of approximately 110 to 175 mA, even if the modulation amplitude increases, offset does not increase and, furthermore, it is clear that it is extremely small compared with the offset value for the conventional method shown in Figure 12. In addition, the generation of RAM noise was also extremely small according to this measurement, and it is clear that there was no obstruction of the measurement of variations in minute absorption spectra.

Consequently, oscillation of the above-mentioned laser-emitting element (M2) at an injection current of approximately 110 to 175 mA of the PSWV region (the injection current region B ~ C) at the above-mentioned temperatures of 15° C, 25° C, and 35° C; and oscillation of the obtained signal having a wavelength of 1395 ~ 1397 nm, in the graph of Figure 3B which corresponds to this, using a frequency modulation method is effectively useful in measuring an absorption spectrum signal for minute quantities of gas with high sensitivity and high precision.

Embodiment 3

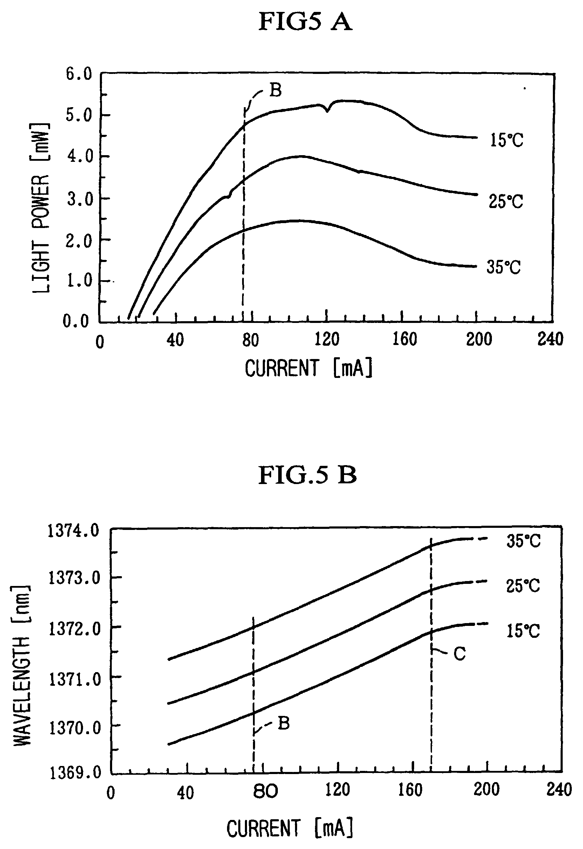

As the emitting element (M3) for the test semiconductor laser, an InGaAsP DFB (distribution feedback) semiconductor laser with which oscillation of laser light having a wavelength of 1369 to 1374nm is possible was used. The laser element was maintained at each of three temperatures of 15° C, 25° C, and 35° C. At each temperature, the injection current (mA) was varied, and (Figure 5A) the variation in oscillation light power (mW) and (Figure 5B) the variation in oscillation wavelength transition (nm) which accompanied this variation of the injection current were measured. The results are shown by the graphs in Figure 5.

As is clear from the graph in Figure 5A, due to an increase in the injection current (mA), the light power increases proportionally, but in the approximate vicinity of 75 mA (corresponding to point B in Figure 5A), the variation reaches a condition of saturation. On the other hand, as shown by the graph in Figure 5B, as the injection current (mA) increases, the oscillation wavelength transition varies along with it up to 170 mA (corresponding to point C in Figure 5B), however, with increases in the injection current (mA) beyond this, the variation in the wavelength transition stops or remains in an extremely small range.

From these results, the lower limit current value for the injection current is set at approximately 75 mA and the upper limit current value for the injection current is set at approximately 170 mA establishing the PSWV region (region B ~ C) for the semiconductor laser-emitting element (M3) of the present embodiment. It is preferable for the semiconductor laser-emitting element (M3) to oscillate in this injection current region. In addition, the center of this region is approximately 120 mA (15° C), approximately 105 mA (25° C), and approximately 110 mA (35° C).

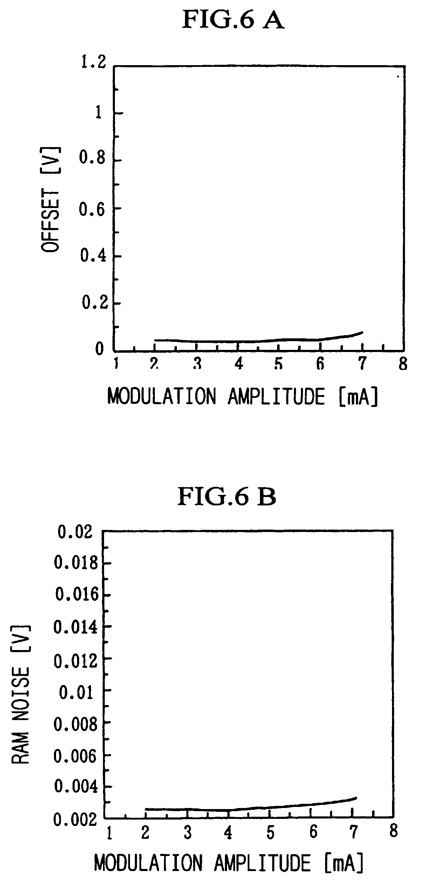

In order to confirm this, in this injection current region, the modulation amplitude of the frequency modulation was varied to 2 ~ 7 mA, and test results for the state of generation of RAM noise (V) and the state of variation of offset (V) due to this variation are shown in Figures 6A and 6B. Figure 6A shows a graph of the condition of the variation of offset (V) and Figure 6B shows a graph of the condition of generation of RAM noise (V).

As is clear from the graphs of Figure 6A and Figure 6B, in this injection current region of approximately 75 to 170 mA, even if the modulation amplitude increases, offset does not increase and, furthermore, it is clear that it is extremely small compared with the offset value for the conventional method shown in Figure 12. In addition, the generation of RAM noise was also extremely small according to this measurement, and it is clear that there was no obstruction of the measurement of variations in minute absorption spectra.

Consequently, oscillation of the above-mentioned laser-emitting element (M3) at an injection current of approximately 75 to 170 mA of the PSWV region (the injection current region B ~ C) at the above-mentioned temperatures of 15° C, 25° C, and 35° C; and oscillation of the obtained signal having a wavelength of 1370.5 ~ 1373.5 nm, in the graph of Figure 5B which corresponds to this, using a frequency modulation method is effectively useful in measuring an absorption spectral signal for minute quantities of gas with high sensitivity and high precision.

Embodiment 4

Next, an example in which actual spectrographic analysis is conducted using semiconductor laser light oscillated within the injection current region of the above-mentioned PSWV (injection current region B ~ C) region of the present invention, this is explained as Embodiment 4.

The absorption spectrum of a minute amount of moisture contained in nitrogen gas was measured using the semiconductor laser spectrographic analysis device shown in Figure 9 which was explained above. The conditions for this example were as follows.

Used semiconductor laser-emitting element: The InGaAsP (distribution feedback) semiconductor laser-emitting element (M3) with which oscillation of the laser light having a wavelength of 1369 ~ 1374 nm was oscillated and which was tested in Embodiment 3 was used.

Oscillation Method: direct frequency modulation was carried out by applying a 4 kHz sine wave to the laser injection current.

Sample Cell: optical path of 50 cm with both ends of the cell being made into a window having a Brewster angle.

Sample gas: Nitrogen gas containing 5 ppm of water vapor ($H_2O$) was introduced into the sample cell at a pressure of 70 Torr and a flow rate of 400 SCCM.

Photodetector: A Ge photodiode with pre-amp was used.

Then, the 2f component of the modulation frequency of the output signal from the photodetection was taken using the lock-in amplifier and the secondary differential absorption spectrum was measured by taking.

Under the above experimental conditions, the method of the present invention was conducted in which semiconductor laser light which was made to oscillated by an injection current region within the range of the PSWV region (current region B ~ C) was used and, for the purpose of comparison, the method of the comparative examples was conducted in which the semiconductor laser light was oscillated by an injection current of the PVWV region (the current region A ~ B) of Figure 10 as is conventionally carried out.

The Method of the Present Invention

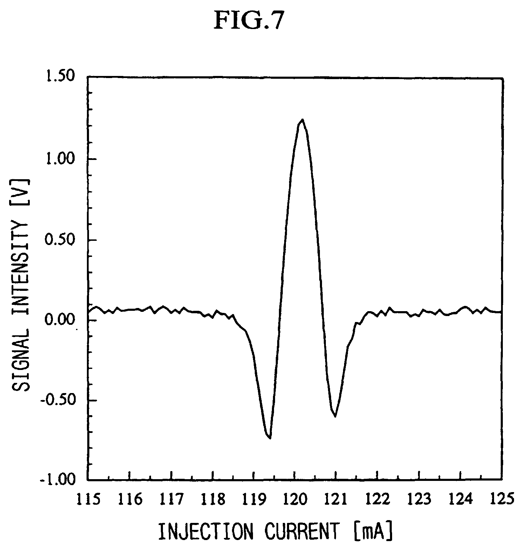

The temperature of the laser-emitting element (M3) was maintained at 15° C. An injection current (direct current) for the laser-emitting element was used within an injection current range of 115 mA ~ 125 mA (corresponding wavelength: approximately 1370.9 ~ 1371.2 nm) with the central current value of the region therebetween being 120 mA at a temperature of 15° C, this range being within the range of current values of 75 ~ 170 mA of the PSWV region (current region B ~ C) of the laser-emitting element (M3) illustrated by the graphs in Figure 5. The injection current was driven at values varying by 0.1 mA within this range.
In addition, the amplitude of the 4 kHz modulation frequency was set at 3 mA, and superimposed on the direct current.
The secondary differential absorption spectrum obtained as a result is shown in Figure 7. As is clear from this graph, it was possible to confirm that the offset value is extremely small at 0.07 (V) and the RAM noise is small enough to be ignored. In addition, the S/N ratio for these measurements is 75.

The Method of the Comparative Example

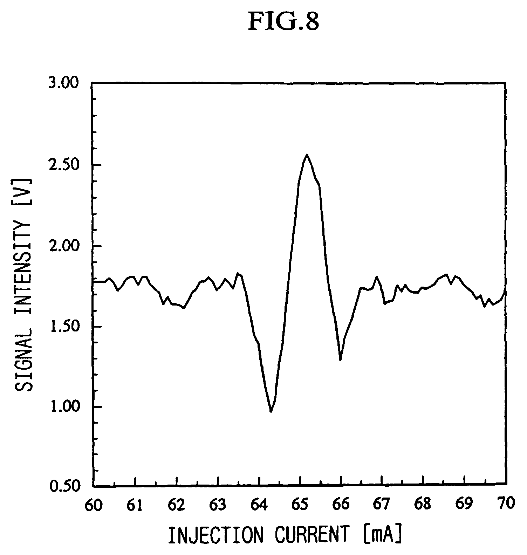

The temperature of the laser-emitting element (M3) was maintained at 25° C. An injection current (direct current) for the laser-emitting element was used within the range of 60 mA -70 mA (corresponding wavelength: approximately 1370.8 ~ 1371.0 nm) which is a range below the current value of 75 mA of the PVWV region (current region ~ B) of the laser-emitting element (M3) shown in the graphs of Figure 5. The injection current was driven at values varying by 0.1 mA.
In addition, the amplitude of the 4 kHz modulation frequency was set at 3 mA as with the present invention mentioned above, and superimposed on the direct current.
The secondary differential absorption spectrum obtained as a result is shown in Figure 8. As is clear from this graph, the offset value is extremely large at approximately 1.8 (V) and the RAM noise is also large, and this confirms that measurement of small fluctuations would be difficult. In addition, the S/N ratio for these measurements is 18.
Moreover, in Embodiment 4 above, as the impurity, steam ($H_2O$) was used as an example to explain the spectrographic analysis thereof, however, the spectrographic analysis method of the present invention is not limited to this. Naturally, the spectrographic analysis method of the present invention can be suitably used for analysis of any impurities if the substances absorbs light within the wavelength range of semiconductor laser light, and the spectrographic analysis uses semiconductor laser light.

Industrial Applicability

The spectrographic analysis for impurities in gas of the present invention is carried out using the configuration explained above and obtains the following results.

Since laser light is used for which the current injected into the light emitting element of the semiconductor laser light used in absorption spectrographic analysis is oscillated at a current value of the region (the PSWV region) in which the current value at which saturation of variation in the laser oscillation light power increase which accompanies increases in the injection current begins to stabilize is set as the lower limit current value, and the current value at which variation in the transition of oscillation wavelength which accompanies increases in the injection current initially becomes minimal is set as the upper limit current value, the offset output which accompanies the power increase variation due to the frequency modulation for the purpose of increasing sensitivity can be reduced and standardized, and in addition, and the RAM noise and the offset of output can be suppressed to a minimum. As a result, the measurement sensitivity is increased, minute absorption signals are possible, analysis of minute amounts lower than ppm with high accuracy is possible.

Consequently, the spectrographic analysis method of the present invention is a method for analyzing minute amounts of impurities in gases, such as trace amounts of water within nitrogen gas, with high sensitivity and high accuracy, and this has applications for use in the gas industry and the like.

**Claims**

1.  A method for spectrographic analysis of impurities in gas by measuring absorption signal strength of using frequency-modulated semiconductor laser light comprising:

    setting a current value at which saturation of variation in laser oscillation light power with respect to injection current for a semiconductor laser begins as a lower limit current value, setting a current value at which variation in wavelength transition with respect to injection current initially becomes minimal as a upper limit current value, and using laser light which oscillates at an injection current region between said lower limit current value and said upper limit current value.

2.  A method for spectrographic analysis of impurities in gas according to claim 1, wherein a center value of the current region of injection current values is a center point of said current region in which variation in the increase of said laser oscillation light power with respect to the increase in injection current to said semiconductor laser-emitting element is zero or becomes minimal.

3.  A method for spectrographic analysis of impurities in gas according to claims 1 or 2, comprising

    maintaining the temperature of said semiconductor laser-emitting element at a constant level, adjusting the region of the injection current, synchronizing the oscillation wavelength of the laser light, the central wavelength of absorption, and the center of said injection current region, and measuring said absorption signal strength using the semiconductor laser light.

# FIG.1 A

# FIG.1 B

# FIG.2 A

# FIG.2 B

# FIG.3 A

# FIG.3 B

# FIG.4 A

# FIG.4 B

# FIG5 A

# FIG.5 B

## FIG.6 A

## FIG.6 B

# FIG.7

FIG.8

# FIG.9

EP 0 977 028 A1

# FIG.10

# FIG.11

# FIG.12

# FIG.13

# INTERNATIONAL SEARCH REPORT

| International application No. |
|---|
| PCT/JP99/00323 |

| A. CLASSIFICATION OF SUBJECT MATTER |
|---|
| Int.Cl⁶ G01N21/39 |
| |
| According to International Patent Classification (IPC) or to both national classification and IPC |

**B. FIELDS SEARCHED**

Minimum documentation searched (classification system followed by classification symbols)
Int.Cl⁶ G01N21/27-21/39, G01J3/00-3/52, H01S3/00-3/30

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)
JOIS, WPI/L

**C. DOCUMENTS CONSIDERED TO BE RELEVANT**

| Category* | Citation of document, with indication, where appropriate, of the relevant passages | Relevant to claim No. |
|---|---|---|
| X | JP, 58-34344, A (Fujitsu Ltd.), 28 February, 1983 (28. 02. 83) (Family: none) | 1-3 |
| A | JP, 2-241133, A (American Telephone and Telegraph Co.), 25 September, 1990 (25. 09. 90) & GB, 2229880, A & US, 5020153, A | 1-3 |
| A | JP, 58-35441, A (Fujitsu Ltd.), 2 March, 1983 (02. 03. 83) (Family: none) | 1-3 |
| EA | JP, 10-135553, A (Mitsubishi Heavy Industries,Ltd.), 22 May, 1998 (22. 05. 98) (Family: none) | 1-3 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 23 April, 1999 (23. 04. 99) | 11 May, 1999 (11. 05. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)